# EUROPEAN PATENT APPLICATION

(11) **EP 2 548 446 A2**
(43) Date of publication of application: **23.01.2013**
(21) Application number: 12177210.7
(22) Date of filing: 20.07.2012
(51) Int. Cl.: A23G 1/56, A23G 1/40, A23L 1/076, A23L 1/187

(54) **Manufacturing process of cocoa cream with honey and product obtained**

(30) Priority: 21.07.2011 ES 201131254
(71) Applicant: Naturval Apícola, S.L., 46192 Montserrat (ES)
(72) Inventor: Escriche Roberto, Isabel, 46192 Valencia (ES); Juan Borras, Mª Del Sol, 46192 Valencia (ES); Doménech Antich, Eva Maria, 46192 Valencia (ES); Moreno Boils, José Vicente, 46192 Valencia (ES)
(74) Representative: Isern-Jara, Nuria

(57) **Abstract**

Manufacturing process of a cocoa cream with honey as the main component of said cream, using different aromas such as hazelnut and chocolate. A prior stage of preparation of the honey and successive stages of mixing and stirring the ingredients is developed, depending on the desired end-consistency or texture. Honey is the major component of the product obtained and the product can contain up to 90% by weight.

## Description

### Field of the Invention

The present invention falls within the scope of the food industry, relating in particular to the preparation of cocoa creams for spreading, filling, etc.

This invention specifically relates to the preparation of a cocoa cream, to which honey is added as an essential component, thereby obtaining a low fat content, high-energy value food product, being highly recommended especially for snacks and breakfasts.

The manufacturing process developed to obtain a product with excellent organoleptic properties that facilitate and encourage the consumption of natural products (honey and cocoa) as substitutes for other energy products containing a high fat content and preservatives.

### Background

Chocolate creams with different additional ingredients including honey, combined with other compounds such as milk, fruits, nuts, cereals, such as the cream described in document W00156397 are known, where the honey is a minor component of the mixture as a sweetener and not in an adequate proportion to facilitate its use as a natural, healthy product.

The present invention describes the preparation of a food product mostly containing cocoa and honey, with excellent nutritional and dietary properties.

The present invention describes the preparation of said food cream, which would provide consumers with the benefits of honey, including 20% less calories than sugar traditionally used in these preparations, the beneficial effects of honey, along with the pleasure of enjoying the taste of cocoa, rich in iron, and the rest of the components. The cocoa cream with honey obtained has optimum organoleptic properties that favour its consumption, while providing a minimum of calories to consumers, making it a good nutritional, dietary supplement.

The method for manufacturing takes place in few stages, making it a fast, economical and safe process in terms of end-product characteristics and quality.

### Detailed description of the Invention

The present invention discloses a method for manufacturing a cocoa cream with honey as the main components of said cream, using different aromas such as hazelnut and chocolate aromas. Successive stages of mixing and stirring the ingredients are developed, depending on the desired end-consistency or texture.

A preliminary stage of preparation of the honey is required to carry out the process, for the honey to enter the process in optimum conditions of temperature and texture, irrespective of the initial conditions of the honey.

Cocoa powder is preferably used in making the cream, being at a concentration of 3- 30% in the final preparation. In respect of the honey, a combination of liquid honey is used which may be between 50-90% by weight and natural honey which may be between 3-30% by weight.

For the purposes of this invention, the term "liquid honey" defines a honey that, once extracted, is mechanically treated by means of a centrifuge in a hopper intended to homogenise, while it is heat-treated for pasteurization and subsequently filtered to remove impurities such as wax and others.

The term "natural honey" referred to herein, defines honey extracted directly from the hive, without being processed further, whether mechanically, chemically or otherwise.

Other ingredients the preparation may have are natural or artificial aromas, containing an aroma or combination thereof, always with a maximum concentration of 5% by weight for each aroma.

The embodiments described below are for illustrative purposes and should not be interpreted in the strict sense thereof, but rather to illustrate a preferred mode of carrying out the invention.

### Example 1. Manufacturing process of the cream.

The process for manufacturing the cocoa cream with honey is performed using a variable-speed mixer at 25 to 500 rpm.

At a preliminary stage of the process the honeys have to be mixed, until a denser, finer consistency is obtained. The speed and the mixing time depends on the initial consistency of the honey to be used and the ambient temperature at which the process takes place, which should be between 10 to 30°C. This operation will take place between 25 and 400 rpm.

The honeys should be heated between 30-60 ºC, regardless of ambient temperature.

Aromas, such as hazelnut, chocolate and others are then added and the ingredients are stirred at a rate of 25-200 rpm, for the time necessary until obtaining a homogenised mixture. The cocoa powder is then added, continuing stirring as above for 1 to 8 hours, depending on the desired texture.

Upon completion of this stirring stage, the mixture must be left to stand for between 1 and 24 hours, so the foam remains at the top of the tank and does not pass to the jars during the bottling stage of the product obtained.

Bottling is performed by taking the product from the bottom of the tank, maintaining the appropriate aseptic conditions. The bottled product is then cooled from 18 to 25 ° C during 48 -72 hours to stabilise the cream obtained. The cream can be stored in a cool place following this period.

### Example 2. Cocoa cream with honey.

In a preferred embodiment of the invention, the cocoa cream with honey obtained by the process described above may comprise the following main components (concentration by weight):
Honey in its natural state ------------ 23%
Liquid honey ------------ 65%
Cocoa powder------------------------ 3 %
Chocolate aroma ----------------- 4.5 %
Hazelnut aroma ------------------- 4.5 %

The proportion of honey in relation to the remaining components of the cream, ensures an adequate nutritional supply from the honey, as well as product stability.

Other substances, such as stabilisers and preservatives from the mixture, can be added in amounts which are known in the prior art.

To obtain different textures (spreads, filling, mousse and others) the concentrations described above can be varied, while maintaining the honey as a major component of the mixture.

## Claims

1. Manufacturing process of a cocoa cream with honey, **characterised in that** it comprises the following stages:
a) Prior preparation of the natural, liquid honey.
b) Preparation of a homogeneous mixture of honey and aromatic substances, stirring the ingredients between 25 to 200 rpm.
c) Addition of cocoa powder and stirring at 20 - 200 rpm for 1 to 8 hours.
d) Standing the mixture for 1 to 24 hours.
e) Bottling of the product, under aseptic conditions, from the bottom of the preparation tank.
f) Cooling of the bottled product between 18- 25°C during 48 to 72 hours.
g) Storage in a cool place.

2. Manufacturing process of a cocoa cream with honey according to claim 1, **characterised in that** the natural honey is mixed between 25-400 rpm at a temperature of between 10 to 30°C.

3. Manufacturing process of a cocoa cream with honey according to claim 1, wherein the liquid honey is heated between 30 - 60 °C.

4. Cocoa cream with honey, **characterised in that** it comprises a concentration between 3-30% by weight, a liquid honey between 50-90% by weight and natural honey between 3-30% by weight.

5. Cocoa cream with honey according to claim 4, **characterised in that** it additionally comprises at least one aromatic substance at a maximum concentration of 5% by weight.

6. Cocoa cream with honey according to claim 5, **characterised in that** the aromatic substance is selected from hazelnut aroma, chocolate aroma, peanut aroma, walnut aroma, caramel aroma or a combination thereof.
